(19) Europäisches Patentamt European Patent Office Office européen des brevets

(11) **EP 3 494 608 B1**

(12) **FASCICULE DE BREVET EUROPEEN**

(45) Date de publication et mention de la délivrance du brevet:
**11.10.2023 Bulletin 2023/41**

(21) Numéro de dépôt: **17754293.3**

(22) Date de dépôt: **28.07.2017**

(51) Classification Internationale des Brevets (IPC):
*H01M 8/04007* (2016.01)    *H01M 8/04014* (2016.01)
*H01M 8/04089* (2016.01)    *H01M 8/04119* (2016.01)
*H01M 8/124* (2016.01)    *C25B 15/08* (2006.01)
*C25B 9/77* (2021.01)    *C25B 1/042* (2021.01)
*C25B 1/23* (2021.01)    *C25B 9/67* (2021.01)
*C25B 9/75* (2021.01)    *C25B 15/021* (2021.01)
*H01M 8/12* (2016.01)

(52) Classification Coopérative des Brevets (CPC):
**H01M 8/04014; C25B 1/042; C25B 1/23;**
**C25B 9/67; C25B 9/75; C25B 9/77; C25B 15/021;**
**C25B 15/08; H01M 8/04089;** H01M 8/04164;
H01M 2008/1293; Y02E 60/36; Y02E 60/50

(86) Numéro de dépôt international:
**PCT/EP2017/069150**

(87) Numéro de publication internationale:
**WO 2018/024628 (08.02.2018 Gazette 2018/06)**

(54) **SYSTEME DE REGULATION DE TEMPERATURE ET DE PRESSION D'UN ELECTROLYSEUR A HAUTE TEMPERATURE (SOEC) FONCTIONNANT DE MANIERE REVERSIBLE EN PILE A COMBUSTIBLE (SOFC)**

REGELKREIS ZUR STEUERUNG DER TEMPERATUR UND DES DRUCKS EINES HOCHTEMPERATUR-ELEKTOLYSEURS (SOEC), DER REVERSIBEL ALS BRENNSTOFFZELLE (SOFC) BETREIBBAR IST

SYSTEM FOR CONTROLLING THE TEMPERATURE AND PRESSURE OF A HIGH TEMPERATURE ELECTROLYSER (SOEC) REVERSIBLY OPERABLE AS FUEL CELL (SOFC)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.08.2016 FR 1657537**

(43) Date de publication de la demande:
**12.06.2019 Bulletin 2019/24**

(73) Titulaire: **Commissariat à l'Énergie Atomique et aux Énergies Alternatives**
**75015 Paris (FR)**

(72) Inventeurs:
• **CHATROUX, André**
**38210 Tullins (FR)**
• **DI IORIO, Stéphane**
**38250 Lans en Vercors (FR)**
• **DONNIER-MARECHAL, Thomas**
**38100 Grenoble (FR)**
• **GIROUD, Pascal**
**38410 Saint Martin D'Uriage (FR)**
• **PLANQUE, Michel**
**38180 Seyssins (FR)**
• **REYTIER, Magali**
**38250 Villard de Lans (FR)**
• **ROUX, Guilhem**
**38120 Saint-Egreve (FR)**

(74) Mandataire: **Cabinet Nony**
**11 rue Saint-Georges**
**75009 Paris (FR)**

(56) Documents cités:
**US-A1- 2003 207 164**    **US-A1- 2009 061 270**
**US-A1- 2011 048 484**    **US-A1- 2013 302 708**

## Description

Domaine technique

La présente invention concerne le domaine des piles à combustibles à oxydes solides (SOFC, acronyme anglais pour « Solid Oxide Fuel Cell ») et celui de l'électrolyse de l'eau à haute température (EHT, ou EVHT pour électrolyse de la vapeur d'eau à haute température, ou HTE acronyme anglais pour High Température Electrolysis, ou encore HTSE acronyme anglais pour High Température Steam Electrolysis), également à oxyde solide (SOEC, acronyme anglais pour « Solid Oxide Electrolyte Cell »).

L'invention a trait plus particulièrement à la régulation de la température et de la pression interne d'un système électrolyseur SOEC ou d'une pile à combustible SOFC pouvant être le système électrolyseur fonctionnant de manière réversible.

Bien que décrite en référence principalement à l'application d'électrolyse de l'eau à haute température, l'invention s'applique tout aussi bien à une pile à combustible SOFC.

Art antérieur

L'électrolyse de l'eau est une réaction électrolytique qui décompose l'eau en dioxygène et dihydrogène gazeux avec l'aide d'un courant électrique selon la réaction:

$$H_2O \rightarrow H_2 + 1/2\ O_2$$

Pour réaliser l'électrolyse de l'eau, il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur.

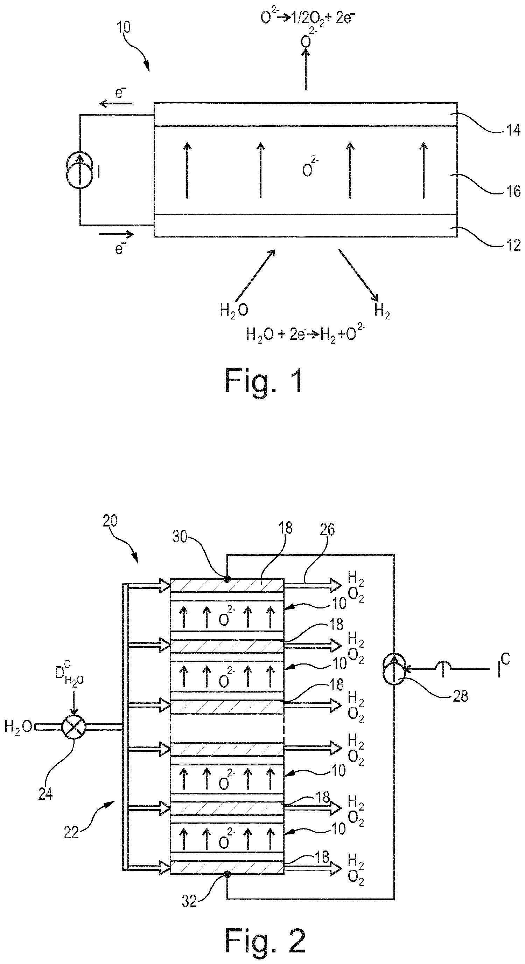

Comme schématisée en figure 1, une cellule d'électrolyse à oxydes solides 10, ou « SOEC » (acronyme anglo-saxon « *Solid Oxide Electrolyte Cell* ») comprend notamment :

- une première électrode conductrice poreuse 12, ou « cathode », destinée à être alimentée en vapeur d'eau pour la production de dihydrogène,
- une seconde électrode conductrice poreuse 14, ou « anode », par laquelle s'échappe le dioxygène ($O_2$) produit par l'électrolyse de l'eau injectée sur la cathode, et
- une membrane à oxyde solide (électrolyte dense) 16 prise en sandwich entre la cathode 12 et l'anode 14, la membrane 16 étant conductrice anionique pour de hautes températures, usuellement des températures supérieures à 600°C.

En chauffant la cellule 10 au moins à cette température et en injectant un courant électrique $I$ entre la cathode 12 et l'anode 14, il se produit alors une réduction de l'eau sur la cathode 12, ce qui génère du dihydrogène ($H_2$) au niveau de la cathode 12 et du dioxygène au niveau de l'anode 14.

Pour mettre en oeuvre l'électrolyse à haute température, il est connu d'utiliser un électrolyseur de type SOEC (acronyme anglais de « *Solid Oxyde Electrolyte Cell* »), constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau $H_2O$ dans le compartiment cathodique. Sous l'effet du courant appliqué à la cellule, la dissociation des molécules d'eau sous forme vapeur est réalisée à l'interface entre l'électrode à hydrogène (cathode) et l'électrolyte: cette dissociation produit du gaz dihydrogène $H_2$ et des ions oxygène. Le dihydrogène est collecté et évacué en sortie de compartiment à hydrogène. Les ions oxygène $O^{2-}$ migrent à travers l'électrolyte et se recombinent en dioxygène à l'interface entre l'électrolyte et l'électrode à oxygène (anode).

Un empilement 20 de cellules d'électrolyse, destiné à produire une quantité importante d'hydrogène, est illustré par la vue schématique de la figure 2. Notamment, les cellules 10 sont empilées les unes sur les autres en étant séparées par des plaques d'interconnexion 18 connectées à une alimentation 22 en vapeur d'eau pour l'injection de cette vapeur sur les cathodes des cellules 10 conformément à un débit de vapeur d'eau $D_{H_2O}$ réglé par une vanne pilotable 24. Les plaques 18 sont également connectées à un collecteur de gaz 26 pour la collecte des gaz issus de l'électrolyse.

Un exemple d'empilement et de structure de plaques d'interconnexion est décrit dans la demande de brevet WO 2011/110676.

Un tel électrolyseur peut également fonctionner en co-électrolyse, c'est-à-dire avec un mélange de gaz en entrée cathodique composé de vapeur d'eau ($H_2O$) et de gaz carbonique ($CO_2$). Le mélange en sortie cathodique est alors composé d'hydrogène ($H_2$), de vapeur d'eau ($H_2O$), de monoxyde de carbone (CO) et de gaz carbonique ($CO_2$).

Pour la mise en oeuvre effective de l'électrolyse par l'empilement 20, l'empilement est porté à une température supérieure à 600°C, usuellement une température comprise entre 600°C et 950°C, l'alimentation en gaz est mise en marche à débit constant et une source d'alimentation électrique 28 est branchée entre deux bornes 30, 32 de l'empilement 20 afin d'y faire circuler le courant 1.

On distingue dans l'état de la technique deux types de pilotage d'un empilement EVHT: le pilotage dit en mode potentiostatique et le pilotage dit en mode galvanostatique.

Dans un pilotage potentiostatique, la tension entre les bornes 30, 32 de l'empilement 20 est conservée constante, l'alimentation 28 étant par exemple une source de tension constante, ce qui permet de maintenir constant le régime thermique de l'empilement 20, mais pas la production d'hydrogène.

Dans un pilotage galvanostatique, l'intensité du courant I injecté dans l'empilement est conservée constante, l'alimentation électrique 28 étant par exemple une source de courant constant, ce qui permet de maintenir constante la production d'hydrogène, mais dans ce cas l'équilibre thermique peut conduire un changement de température de l'empilement.

Le point de fonctionnement retenu pour un réacteur fixe aussi les conditions thermiques dans l'empilement. En effet, pour les électrolyses réalisées à haute température, l'énergie $\Delta H$ nécessaire à la dissociation de la molécule d'entrée ($H_2O$ ou $CO_2$) peut être apportée sous forme électrique et/ou de chaleur. L'énergie thermique apportée Q se définit alors en fonction de la tension U aux bornes de chaque cellule d'électrolyse par la relation :

$$Q = \frac{I}{2F}\Delta H - U \cdot I \ ,$$

dans laquelle U est la tension électrique, I est le courant électrique et F est la constante de Faraday.

Ainsi, on définit trois régimes de fonctionnement pour l'électrolyse ou la co-électrolyse, correspondant à trois modes thermiques différents pour l'empilement de cellules:

- le mode dit autothermique dans lequel la tension imposée est égale à $\Delta H/2F$. La chaleur consommée par la réaction de dissociation est complètement compensée par les différentes résistances électriques de l'électrolyseur (irréversibilités). L'électrolyseur n'a pas besoin de gestion thermique particulière tout en restant stable en température.
- le mode dit endothermique dans lequel la tension imposée est inférieure à $\Delta H/2F$. L'électrolyseur consomme plus de chaleur que les pertes électriques en son sein. Cette chaleur nécessaire doit alors lui être apportée par un autre moyen, sous peine de voir sa température chuter irrémédiablement.
- le mode dit exothermique dans lequel la tension imposée est supérieure à $\Delta H / 2F$. L'électrolyse consomme alors moins de chaleur que les pertes électriques par effet Joule. Ce dégagement de chaleur au sein de l'électrolyseur doit alors être évacué par un autre moyen, sous peine de voir sa température augmenter de manière rédhibitoire.

En outre, après quelques centaines d'heures de fonctionnement, des phénomènes de dégradation apparaissent dans l'empilement sous forme d'une augmentation de la résistivité électrique.

Dans le pilotage en mode potentiostatique, les phénomènes de dégradation se manifestent par une baisse de l'intensité de courant électrique *I* injecté dans l'empilement, ce qui conduit à une diminution de la quantité d'hydrogène produit, du taux de conversion de la vapeur d'eau en hydrogène et du rendement énergétique à débit d'entrée constant. Ce mode de pilotage ne permet pas de répondre au besoin industriel d'une production définie et constante d'hydrogène.

Inversement, le pilotage en mode galvanostatique permet de répondre au besoin d'une production définie et constante d'hydrogène. Dans ce cas, les phénomènes de dégradation se manifestent sous la forme d'une augmentation de la tension et des pertes ohmiques. L'électrolyseur produit donc toujours la même quantité d'hydrogène, mais cela conduit à un changement de régime thermique qui peut être difficile à gérer, particulièrement lorsque le régime thermique devient très exothermique. La solution généralement adoptée consiste alors à diminuer la température du four contenant l'empilement et donc d'évacuer par convection et rayonnement la chaleur en excès de l'empilement vers les parois du four. Une augmentation du débit de gaz de balayage du four permet aussi d'évacuer une partie de cette chaleur en excès. Cependant, ces actions permettent de refroidir la périphérie de l'empilement au prix d'un important gradient de température entre le centre et la paroi de l'empilement.

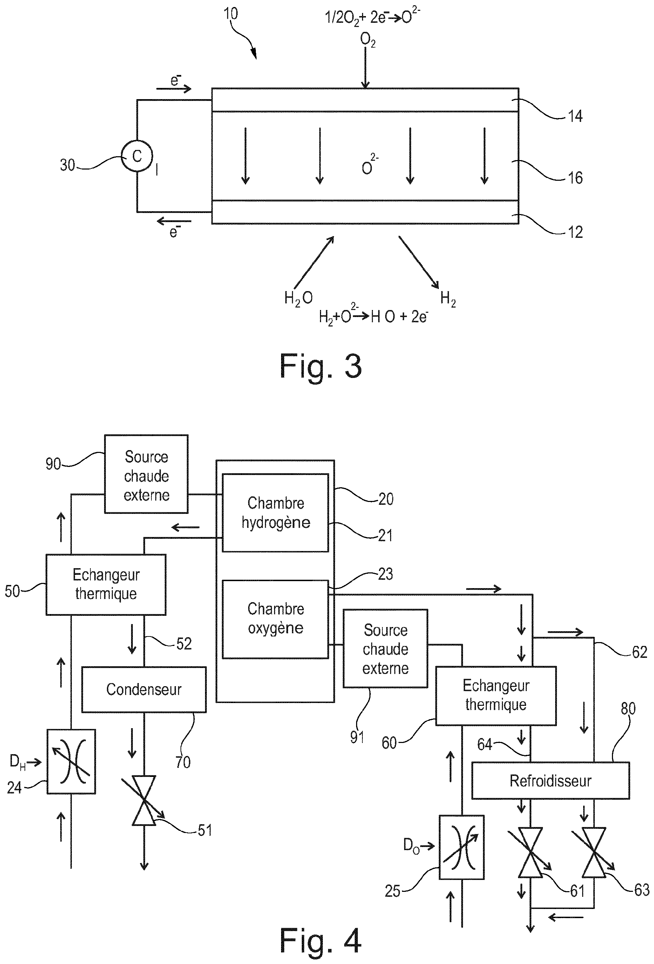

Une pile à oxyde solide à haute température, plus connue sous le nom de pile SOFC (pour « *Solid Oxyde Fuel Cell* ») et un électrolyseur EVHT peuvent avoir des structures identiques, seul leur mode de fonctionnement étant différent. En se référant à la figure 3, une cellule électrochimique constitutive d'une pile SOFC comprend les mêmes éléments, que sont l'anode 12, la cathode 14, l'électrolyte 16, qu'une cellule d'électrolyse.

Une cellule de la pile est alimentée, avec des débits constants, sur son anode par du dihydrogène ou un autre combustible comme du méthane $CH_4$, et sur sa cathode par du dioxygène pur ou contenu dans l'air envoyé, et connectée à une charge C pour délivrer le courant électrique produit.

De manière similaire à l'électrolyseur, une pile SOFC est pilotée, soit selon un mode galvanostatique, imposant que la pile débite un courant constant, soit selon un mode potentiostatique, imposant que la pile délivre une tension électrique constante.

Le fonctionnement de la pile sous hydrogène, en tant que combustible/carburant, est toujours exothermique mais pour un point de fonctionnement défini, il y a le même problème de contrôle thermique dans la pile que dans un électrolyseur.

Par ailleurs, l'hydrogène n'est pas le seul carburant possible pour une pile SOFC. Le méthane ($CH_4$) présente des propriétés particulières avec une réaction fortement endothermique de reformage interne : $CH_4 + H_2O \rightarrow 3H_2 + CO$. Cette réaction de reformage interne est catalysée par le cermet nickel-zircone de l'électrode 12, alors que la réaction d'oxydation de l'hydrogène au sein de l'empilement 20 est fortement exothermique.

Le fonctionnement de la pile avec du $CH_4$ en tant que carburant peut donc être soit endothermique, soit exothermique et conduire à de fortes variations de température au sein de l'empilement. Cependant, la pile SOFC est une technologie plus avancée du point de vue industriel et plusieurs solutions ont déjà été mises en oeuvre et décrites dans la littérature brevets ci-après.

La propriété d'endothermicité de la réaction de reformage interne du méthane peut être utilisée pour maitriser la thermique d'un empilement. La demande de brevet US 2007/0231650 préconise cette solution une injection maitrisée de $CH_4$ sur toute la surface des cellules de l'empilement de façon à ajuster le taux de reformage interne. Ainsi, il est possible de réguler la température de l'empilement en agissant sur le débit de $CH_4$ de façon à ce que la quantité d'énergie absorbée par la réaction de reformage du méthane compense la quantité d'énergie émise par la réaction d'oxydation de l'hydrogène.

Pour optimiser l'efficacité énergétique, le préchauffage des gaz en entrée de l'empilement doit être fait en récupérant la chaleur de gaz de sortie de l'empilement. Pour cela des échangeurs de chaleur sont utilisés. Toutes les combinaisons d'échangeurs sont divulguées dans différents brevets.

Ainsi, la demande US 2003/0207164 décrit la mise en oeuvre d'un échangeur entre la sortie des compartiments anodiques et l'entrée de ces mêmes compartiments anodiques et, d'un autre échangeur entre la sortie des compartiments cathodiques et l'entrée de ces mêmes compartiments.

La demande WO 2010/004093A1 divulgue quant à elle la mise en oeuvre d'un échangeur entre la sortie des compartiments cathodiques et l'entrée des compartiments anodiques et, d'un autre échangeur entre la sortie des compartiments anodiques et l'entrée des compartiments cathodiques.

Enfin, le brevet CA 2446360 divulgue un agencement avec un unique échangeur préchauffant les entrées des compartiments anodiques et cathodiques par les gaz de sortie recombinés via un brûleur catalytique.

Dans certains cas, les échangeurs mis en oeuvre, ont une double fonction d'isolation thermique de l'empilement, comme par exemple dans la demande de brevet EP 1202366, qui divulgue un agencement dans lequel l'échangeur est autour de l'empilement de façon à confiner la zone de haute température et avoir une paroi extérieure froide, ce qui permet une réduction du volume d'isolants thermiques, qui est avantageuse dans le cas d'applications de la pile SOFC dans les transports.

Les échangeurs précités sont toujours des équipements passifs portés à haute température et il n'est pas possible de régler le taux d'échange thermique durant le fonctionnement de l'empilement.

Le brevet JP 2002/252003 propose une solution pour réduire si besoin le taux d'échange thermique nécessaire, qui consiste en la mise en place d'un circuit fluidique de dérivation ou by-pass sur l'entrée de l'échangeur du côté de l'alimentation en air. Ainsi, l'air alimentant la pile à combustible SOFC peut être chauffé via l'échangeur ou arriver plus froid si le circuit by-pass est ouvert.

Dimensionné pour une gamme de débit adaptée à une pile SOFC, le circuit by-pass est une bonne solution pour ce cas particulier, mais ce n'est pas le mieux adapté pour un système réversible pile SOFC/ électrolyseur SOEC. En effet, la réversibilité impose des contraintes qui n'ont pas été prises en considération dans la solution du brevet JP 2002/225003.

Ces contraintes sont détaillées maintenant.

Le fonctionnement réversible d'un empilement implique que celui-ci soit capable de fonctionner avec une gamme de débits très importante, en particulier du côté air. Le débit d'air est en effet de l'ordre de 10 fois plus important en mode pile SOFC qu'en mode électrolyseur SOEC. Il en résulte une variation de pression difficilement acceptable par les joints d'étanchéité qui sont mis en oeuvre dans l'empilement.

La demande de brevet US 2002/0081471 propose une solution qui consiste en un contrôle de la pression du gaz en entrée d'empilement et la régulation de pression d'une enceinte contenant l'empilement, de façon à limiter l'écart de pression sur les joints d'étanchéité. Cela permet d'équilibrer l'écart de pression entre celle interne à l'empilement et la pression régnant dans l'enceinte qui contient l'empilement. Cependant, cette solution ne permet pas de limiter la pression interne à l'empilement. Il est d'ailleurs à noter que la solution selon ce brevet est mise en oeuvre uniquement sur une pile SOFC mais pas sur un système réversible SOFC/SOEC.

En d'autres termes, il n'existe pas dans l'état de l'art relatif aux électrolyseurs et piles à combustibles haute température, de solution satisfaisante permettant à la fois la gestion de la thermique et de la pression interne à l'empilement pour un système réversible SOFC/SOEC, c'est-à-dire qui fonctionne pour un électrolyseur SOEC utilisé de manière réversible en pile à combustible SOFC.

Il existe donc un besoin d'améliorer la régulation thermique et de pression interne à un empilement de cellules électrochimiques à oxyde solide fonctionnant de manière réversible soit en pile à combustible SOFC soit en électrolyseur SOEC.

Le but de l'invention est de répondre au moins en partie à ce besoin.

Exposé de l'invention

Pour ce faire, l'invention concerne, selon une première alternative, un système comprenant :

- un réacteur d'électrolyse ou de co-électrolyse à haute température (EHT) comprenant un empilement de cellules d'(de co-)électrolyse élémentaires à oxydes solides comprenant chacune une cathode, une anode, et un électrolyte intercalé entre l'anode et la cathode, les cellules étant connectées électriquement en série, l'empilement comprenant deux bornes électriques pour l'alimentation en courant des cellules et définissant, sur les cathodes, des premières chambres de circulation et, sur les anodes, des deuxièmes chambres de circulation;
- au moins une première ligne d'alimentation, apte à alimenter en un mélange de vapeur d'eau et d'hydrogène ou en un mélange de vapeur d'eau, d'hydrogène et dioxyde de carbone selon un débit $D_H$, l'entrée des premières chambres;
- au moins une deuxième ligne d'alimentation, apte à alimenter en air ou en oxygène ou en un mélange de gaz contenant de l'oxygène, selon un débit $Do$, l'entrée des deuxièmes chambres;
- au moins une première ligne d'évacuation, apte à évacuer l'hydrogène produit à la sortie des premières chambres;
- au moins une deuxième ligne d'évacuation, apte à évacuer l'oxygène produit à la sortie des deuxièmes chambres;
- un premier échangeur thermique, agencé entre la deuxième ligne d'alimentation et la deuxième ligne d'évacuation, de sorte à récupérer la chaleur des gaz de sortie des deuxièmes chambres et la transférer aux gaz en entrée de ces mêmes chambres afin de préchauffer lesdits gaz;
- une ligne de bypass de la deuxième ligne d'évacuation, agencée entre l'entrée et la sortie de l'échangeur, de sorte à dériver tout ou partie des gaz de la sortie des deuxièmes chambres, la partie ou la totalité des gaz dérivée ne circulant alors pas dans l'échangeur ;
- une vanne de réglage de débit, apte à laisser passer un débit de 0 à 100%, agencée sur la ligne de bypass.

Selon une deuxième alternative, le système comprend:

- une pile à combustible (SOFC) à haute température comprenant un empilement de cellules électrochimiques élémentaires à oxydes solides comprenant chacune une anode, une cathode, et un électrolyte intercalé entre l'anode et la cathode, les cellules étant connectées électriquement en série, l'empilement comprenant deux bornes électriques pour la récupération en courant des cellules et définissant, sur les anodes, des premières chambres de circulation et, sur les cathodes, des deuxièmes chambres de circulation;
- au moins une première ligne d'alimentation, apte à alimenter en dihydrogène ou en un autre gaz combustible ou en un mélange contenant un gaz combustible, selon un débit $D_H$, l'entrée des premières chambres;
- au moins une deuxième ligne d'alimentation, apte à alimenter en air ou en oxygène ou en un mélange de gaz contenant de l'oxygène, selon un débit $Do$, l'entrée des deuxièmes chambres;
- au moins une première ligne d'évacuation, apte à évacuer le surplus de dihydrogène ou autre combustible à la sortie des premières chambres;
- au moins une deuxième ligne d'évacuation, apte à évacuer le surplus d'air ou d'oxygène ou du mélange de gaz contenant de l'oxygène à la sortie des deuxièmes chambres;
- un premier échangeur thermique, agencé entre la deuxième ligne d'alimentation et la deuxième ligne d'évacuation, de sorte à récupérer la chaleur des gaz de sortie des deuxièmes chambres et la transférer aux gaz en entrée de ces mêmes chambres afin de préchauffer lesdits gaz;
- une ligne de bypass de la deuxième ligne d'évacuation, agencée entre l'entrée et la sortie de l'échangeur, de sorte à dériver tout ou partie des gaz de la sortie des deuxièmes chambres, la partie ou la totalité des gaz dérivée ne circulant alors pas dans l'échangeur;
- une première vanne de réglage de débit, apte à régler un débit de 0 à 100%, agencée sur la ligne de bypass.

Le système peut être réversible, la pile à combustible SOFC pouvant être un électrolyseur haute température et vice-versa.

Selon un mode de réalisation avantageux, il est prévu en outre un deuxième échangeur thermique, agencé entre la première ligne d'alimentation et la première ligne d'évacuation, de sorte à récupérer la chaleur des gaz de sortie des premières chambres et la transférer aux gaz en entrée de ces mêmes chambres afin de préchauffer lesdits gaz.

Selon ce mode, une variante de réalisation avantageuse, consiste à prévoir une deuxième vanne de débit réglable, apte à régler un débit de 0 à 100%, agencée sur la deuxième ligne d'évacuation en aval de la sortie du deuxième échangeur thermique

Toujours, selon ce mode, le système comprend en outre un condenseur agencé en amont de la deuxième vanne et dimensionné pour éliminer la vapeur d'eau du mélange gazeux circulant dans la deuxième ligne d'évacuation des premières chambres, et pour permettre un fonctionnement de la deuxième vanne à température refroidie, de préférence à température ambiante.

Selon une autre variante de réalisation avantageuse, le système comprend en outre une troisième vanne de débit réglable apte à régler un débit de 0 à 100%, agencée sur la deuxième ligne d'évacuation en aval de la sortie du premier échangeur thermique.

Selon cette autre variante, il est prévu avantageusement un refroidisseur agencé entre la ligne de bypass et la deuxième ligne d'évacuation des deuxièmes chambres, et en amont de la première et de la troisième vanne. Ce refroidisseur est dimensionné de sorte à refroidir le mélange gazeux circulant à la fois dans la ligne de bypass et dans la deuxième ligne d'évacuation et à permettre un fonctionnement desdites première et troisième vannes à température refroidie, de préférence à température ambiante.

De préférence, le refroidisseur est un condenseur comprenant un dispositif de purge de l'eau liquide condensée.

Avantageusement encore, le système peut comprendre en outre :

- une première source de chaleur externe agencée sur la première ligne d'alimentation à l'entrée des premières chambres, le cas échéant en aval du deuxième échangeur thermique, pour apporter de la chaleur supplémentaire, afin de compléter le chauffage des gaz sur ladite première ligne ; et/ou
- une deuxième source de chaleur externe, agencée sur la deuxième ligne d'alimentation à l'entrée des deuxièmes chambres, et en aval du premier échangeur thermique, pour apporter de la chaleur supplémentaire, afin de compléter le chauffage des gaz sur ladite ligne.

Ainsi, l'invention consiste à implanter une ligne ou circuit de by-pass pour dériver si besoin une partie des gaz chauds issus des chambres dites à oxygène (chambres anodiques en mode SOEC, cathodiques en mode pile SOFC), ce qui va refroidir l'échangeur thermique implanté dans le circuit de circulation de l'oxygène.

Cela permet de moins préchauffer et donc baisser la température des gaz entrants dans les chambres à oxygène, et par là baisser la température de tout l'empilement de cellules électrochimiques. Le résultat obtenu du point de vue thermique est similaire à celui du système décrit dans le brevet JP 2002/225003, mais avec comme avantage supplémentaire de pouvoir baisser également la pression régnant au sein des chambres à oxygène. En effet, la ligne de bypass selon l'invention est prévu sur la sortie des gaz (et non sur l'entrée), la perte de charges induite par la ligne de bypass est plus faible que celle de l'échangeur, ce qui permet de baisser la pression des chambres à oxygène.

Ainsi, selon l'invention, l'ouverture partielle ou totale de la vanne réglable sur la ligne de by-pass permet d'obtenir à la fois une baisse de la température de l'empilement de cellules et une baisse de la pression dans les chambres à oxygène.

Ceci est un avantage très important pour un système pouvant fonctionner de manière réversible en tant que pile à combustible SOFC ou en tant qu'électrolyseur SOEC car le débit d'air que l'on doit fournir en mode pile SOFC est bien plus important qu'en mode SOEC. La pression interne des chambres à oxygène est donc plus importante en mode pile SOFC et la température de l'empilement est aussi plus élevée puisque ce mode est toujours exothermique. L'utilisation uniquement de la ligne de bypass lors d'un passage d'un mode électrolyse SOEC en mode pile SOFC permet de contrecarrer simultanément les augmentations de pression et de température.

Ainsi, en mode d'électrolyse SOEC, la vanne sur la ligne bypass sera plutôt maintenue fermée pour maximiser l'échange thermique dans l'échangeur entre entrée et sortie des chambres à oxygène, de façon à avoir un bon rendement énergétique, l'apport d'énergie thermique par la réaction proprement dite d'électrolyser permettant de réduire la part d'énergie électrique.

Dans ce mode SOEC, le débit de gaz dans les chambres à oxygène et dans l'échangeur thermique est de l'ordre de 10 fois plus faible qu'en mode pile SOFC, ce qui explique que la pression interne des chambres à oxygène reste faible, même avec la vanne de la ligne bypass qui reste fermée.

De plus, l'échangeur thermique supplémentaire du côté des chambres à hydrogène permet de récupérer la chaleur des gaz de sortie de ces chambres pour préchauffer les gaz d'entrée. Cela permet d'améliorer considérablement le rendement énergétique du système en mode SOEC, l'apport d'énergie thermique par la réaction d'électrolyse permettant de réduire la part d'énergie électrique.

En mode pile SOFC, cet échangeur supplémentaire est utile pour préchauffer les gaz combustibles et éviter un trop fort gradient thermique entre l'entrée et la sortie des chambres à hydrogène. Cet échangeur supplémentaire est également un avantage lorsque la pile SOFC est alimentée en méthane, car la préchauffe du méthane à une température de l'ordre de 700°C permet la réaction endothermique de reformage selon l'équation ci-dessous :

$$CH_4 + H_2O \rightarrow CO + 3H_2$$

Cette réaction de reformage, interne à la pile, est catalysée par les électrodes à hydrogène, de préférence en cermet nickel zircone, ce qui permet donc de disposer rapidement d'hydrogène au sein de la pile pour son fonctionnement.

Les deux vannes réglables supplémentaires, chacune en sortie de ligne d'évacuation des gaz, permettent les réduire le diamètre de passage du gaz sur les sorties des chambres à hydrogène et à oxygène. Par cette réduction de passage, ces vannes augmentent la perte de charge locale, ce qui a pour effet de faire monter la pression de toutes les lignes et chambres de gaz en amont.

Ainsi, grâce à ces deux vannes réglables supplémentaires, il est possible d'équilibrer les pressions d'une part dans les chambres à hydrogène et d'autre part à celles à oxygène, ce qui est un avantage car cela limite les contraintes mécaniques sur les cellules électrochimiques et sur le joint d'étanchéité entre ces deux types de chambres. Ces vannes permettent de gérer par l'aval la pression de chacune des chambres, même si les débits qui y circulent sont très différents.

Par conséquent, en mode pile SOFC, si l'ouverture de la vanne ne permet pas de baisser suffisamment la pression des chambres à oxygène jusqu'à obtenir un équilibre avec les chambres à hydrogène, la fermeture partielle de la vanne sur la ligne d'évacuation de l'hydrogène permet d'augmenter la pression des chambres à hydrogène et d'obtenir l'équilibre recherché.

De même, en mode électrolyse SOEC exothermique, la vanne sur la ligne de bypass pourra être ouverte partiellement pour réduire la température de l'empilement. Cela va avoir pour conséquence de baisser aussi la pression dans les chambres à oxygène, ce qui n'est pas utile en mode SOEC où le débit d'air dans ces chambres est faible.

Pour contrecarrer cette baisse, il sera possible de fermer partiellement la vanne sur la ligne d'évacuation de l'oxygène, ce qui va augmenter la pression régnant dans les chambres à oxygène jusqu'à obtenir un équilibre avec les chambres à hydrogène.

Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :

- la figure 1 est une vue schématique d'une cellule électrochimique élémentaire d'un électrolyseur EVHT ;
- la figure 2 est une vue schématique d'un empilement de cellules selon la figure 1 ;
- la figure 3 est une vue schématique d'une cellule électrochimique d'une pile à combustible SOFC ;
- la figure 4 est une vue schématique d'un système selon l'invention comprenant un empilement de cellules électrochimiques fonctionnant en tant qu'électrolyseur EHT et de manière réversible en tant que pile à combustible SOFC, la figure montrant les composants du système pour la régulation de la thermique et de la pression;
- la figure 5 illustre sous forme de courbes les résultats expérimentaux de l'évolution de la pression en entrée d'empilement selon l'état de l'art, et selon l'invention avec une ligne de bypass ouverte respectivement à 50% ou 100%;
- la figure 6 illustre sous forme de courbes les résultats expérimentaux de l'évolution de la température en entrée d'empilement sur les chambres d'alimentation en air selon l'état de l'art, et selon l'invention avec une ligne de bypass ouverte à 50%.

Les figures 1 à 3 relatives à l'état de l'art ont déjà été commentées en préambule. Elles ne sont donc pas détaillées ci-après.

Par souci de clarté, les mêmes éléments d'un empilement pour réacteur d'électrolyse EHT ou pile à combustible SOFC selon l'état de l'art et d'un empilement 20 pour réacteur d'électrolyse EHT fonctionnant de manière réversible en pile SOFC, utilisé en tant que partie d'un système selon l'invention sont désignés par les mêmes références numériques.

La description qui va suivre du système selon l'invention est faite en référence à un électrolyseur EHT, dans lequel les électrodes à hydrogène sont les cathodes, les électrodes à oxygène sont les anodes, et les chambres 21 sont les chambres de circulation en vapeur d'eau et d'hydrogène ou de vapeur d'eau, d'hydrogène et dioxyde de carbone ($CO_2$) tandis que les chambres 23 sont les chambres de circulation du gaz drainant et l'oxygène produit.

Il va de soi qu'en mode pile SOFC inverse, les électrodes à hydrogène sont les anodes, les électrodes à oxygène sont les cathodes, les chambres 21 sont les chambres de circulation du combustible/carburant tandis que les chambres 23 sont les chambres de circulation du comburant.

On précise également que les termes « amont », « aval », « entrée », « sortie » sont à considérer par rapport au sens de circulation des gaz.

On précise également que l'électrolyseur fonctionnant de manière réversible en pile à combustible, décrits sont de type à oxydes solides (SOEC, acronyme anglais de « *Solid Oxyde Electrolyte Cell* »ou SOFC, acronyme anglais de « *Solid Oxide Fuel Cell* ») fonctionnant à haute température.

Ainsi, tous les constituants (anode/électrolyte/cathode) d'une cellule d'électrolyse ou de pile sont des céramiques. La haute température de fonctionnement d'un électrolyseur (réacteur d'électrolyse) SOEC ou d'une pile SOFC est typiquement comprise entre 600°C et 950°C.

Typiquement, les caractéristiques d'une cellule électrochimique élémentaire convenant à l'invention, du type cathode support (CSC) en mode électrolyse SOEC ou anode support en mode pile SOFC, peuvent être celles indiquées comme suit dans le tableau ci-dessous.

**TABLEAU**

| Cellule d'électrolyse | Unité | Valeur |
|---|---|---|
| **Cathode** | | |
| Matériau constitutif | | Ni-YSZ |
| Epaisseur | $\mu$m | 315 |
| Conductivité thermique | W m$^{-1}$ K$^{-1}$ | 13,1 |
| Conductivité électrique | $\Omega^{-1}$ m$^{-1}$ | $10^5$ |
| Porosité | | 0,37 |
| Perméabilité | m$^2$ | $10^{-13}$ |
| Tortuosité | | 4 |
| Densité de courant | A.m$^{-2}$ | 5300 |
| **Anode** | | |
| Matériau constitutif | | LSM |
| Epaisseur | $\mu$m | 20 |
| Conductivité thermique | W m$^{-1}$ K$^{-1}$ | 9,6 |
| Conductivité électrique | $\Omega^{-1}$ m$^{-1}$ | $1\,10^4$ |
| Porosité | | 0,37 |
| Perméabilité | m$^2$ | $10^{-13}$ |
| Tortuosité | | 4 |
| Densité de courant | A.m$^{-2}$ | 2000 |
| **Electrolyte** | | |
| Matériau constitutif | | YSZ |
| Epaisseur | $\mu$m | |
| Résistivité | $\Omega$ m | 0,42 |

En se référant à la figure 4, le système de régulation de la thermique et de la pression selon l'invention a été mis en oeuvre par les inventeurs tel qu'il a été mis en oeuvre, en tant que prototype expérimental.

Le système comprend tout d'abord un réacteur d'électrolyse ou de co-électrolyse à haute température (EHT) comprenant un empilement 20 de cellules d' (de co-) électrolyse élémentaires à oxydes solides comprenant chacune une cathode, une anode, et un électrolyte intercalé entre l'anode et la cathode, les cellules étant connectées électriquement en série, l'empilement comprenant deux bornes électriques 30, 32 pour l'alimentation en courant des cellules et définissant des chambres de circulation 21 de vapeur d'eau et d'hydrogène ou de vapeur d'eau, d'hydrogène et dioxyde de carbone (CO$_2$) sur les cathodes et, des chambres de circulation 23 en air ou en oxygène ou un mélange de gaz contenant de l'oxygène sur les anodes.

L'empilement 20 est un empilement d'un nombre égal à 25 cellules électrochimiques à oxyde solide, chacune de surface égale à 100 cm$^2$.

Le système comprend en outre :

- une ligne d'alimentation L1, apte à alimenter en vapeur d'eau et d'hydrogène ou de vapeur d'eau, d'hydrogène et dioxyde de carbone (CO$_2$), selon un débit $D_H$, l'entrée des chambres 21;
- une deuxième ligne d'alimentation L2, apte à alimenter en air en oxygène ou un mélange de gaz contenant de l'oxygène, selon un débit $Do$, l'entrée des chambres 23;
- une ligne d'évacuation L3, apte à évacuer l'hydrogène produit à la sortie des chambres 21;
- une ligne d'évacuation L4, apte à évacuer l'oxygène produit à la sortie des chambres 23.

Selon l'invention, le système comprend en outre :

- un échangeur thermique 60, agencé entre la ligne d'alimentation L2 et la ligne d'évacuation L4, de sorte à récupérer la chaleur des gaz de sortie des deuxièmes chambres et la transférer aux gaz en entrée de ces mêmes chambres afin de préchauffer lesdits gaz;
- une ligne de bypass 62 de la ligne d'évacuation L4, agencée entre l'entrée et la sortie de l'échangeur 60, de sorte à dériver tout ou partie des gaz de la sortie des chambres 23, la partie ou la totalité des gaz dérivée ne circulant alors pas dans l'échangeur 60;
- une vanne de réglage de débit 63, apte à laisser passer un débit de 0 à 100%, agencée sur la ligne de bypass 62.

Un autre échangeur thermique 50 est agencé entre la ligne d'alimentation L1 et la ligne d'évacuation L3, de sorte à récupérer la chaleur des gaz de sortie des chambres 21 et la transférer aux gaz en entrée de ces mêmes chambres afin de préchauffer lesdits gaz.

Un régulateur de débit 24 agencé sur la ligne d'alimentation L1, en amont de l'échangeur 50 peut régler un débit de gaz en fonction du mode électrolyseur SOEC ou du mode pile SOFC, de préférence un débit d'hydrogène entre 0 et 500 l/h, un débit de vapeur d'eau entre 0 et 1 m$^3$/h et un débit de méthane entre 0 et 1,4 m$^3$/h.

Un régulateur de débit 25 agencé sur la ligne d'alimentation L2, en amont de l'échangeur 60 peut régler un débit d'air, de préférence entre 0 et 6 m$^3$/h.

Les échangeurs thermiques 50 et 60 ont avantageusement une efficacité de 90%, ils permettent donc de récupérer 90% de la chaleur des gaz de sortie pour préchauffer les gaz d'entrée.

La ligne de bypass 62 peut présenter un diamètre interne typiquement de 10mm, et comme indiqué ci-avant, permet de faire circuler une partie des gaz chauds en sortie de la chambre oxygène 23 sans passer par l'échangeur thermique 60.

La vanne 63 sur la ligne de bypass 62 régule la quantité de gaz chaud qui circule sans passer par l'échangeur 60, ce qui permet de moduler la chaleur des gaz en entrée des chambres à oxygène 23 et le niveau de pression de ces chambres à oxygène 23 à fort débit d'air.

La vanne de débit réglable 51, apte à régler un débit de 0 à 100%, agencée sur la ligne d'évacuation L3, en aval de la sortie de l'échangeur thermique 50, permet donc de réduire le diamètre de passage de la ligne d'évacuation L3. Il en résulte une perte de charge réglable, fonction du débit circulant dans cette ligne L3. Cette perte de charge en aval du circuit de circulation de l'hydrogène se répercute sur tous les composants en amont, ce qui permet de réguler la pression des chambres à hydrogène 21 et donc d'établir un équilibre de pression entre les chambres 21 et les chambres à oxygène 23, même pour des débits très différents entre ces chambres.

La vanne de débit réglable 61, apte à régler un débit de 0 à 100%, agencée sur la ligne d'évacuation L4, en aval de la sortie de l'échangeur thermique 60, permet donc de réduire le diamètre de passage de la ligne d'évacuation L4. Il en résulte une perte de charge réglable, fonction du débit circulant dans cette ligne L4.

Cette perte de charge en aval du circuit de circulation de l'oxygène se répercute sur tous les composants en amont, ce qui permet de réguler la pression des chambres à oxygène 23 et donc à nouveau d'établir un équilibre de pression entre les chambres 23 et les chambres à hydrogène 21, même pour des débits très différents, même pour de débits très différentes entres ces chambres.

Le condenseur 70, agencé en amont de la vanne 51 est dimensionné pour éliminer la vapeur d'eau du mélange gazeux circulant dans la ligne d'évacuation L3 des chambres à hydrogène 21, et pour permettre un fonctionnement de la vanne 51 à température refroidie, de préférence à température ambiante.

Le condenseur 70 peut être avantageusement constitué d'un tube métallique dans lequel circulent les gaz chaud sortant de l'échangeur 50 dans une capacité d'eau froide, typiquement à 12°C. Un purgeur permet d'évacuer l'eau condensée.

Le refroidisseur 80, agencé entre la ligne de bypass 62 et la ligne d'évacuation L4 des chambres à oxygène 23, et en amont des vannes 61 et 63, est dimensionné de sorte à refroidir le mélange gazeux circulant à la fois dans la ligne de bypass 62 et dans la ligne d'évacuation L4 et à permettre un fonctionnement desdites vannes 61, 63 à température refroidie, de préférence à température ambiante

Le refroidisseur 80 peut être avantageusement constitué d'un tube métallique dans lequel circulent les gaz chaud sortant de l'échangeur 60 et d'un tube métallique de la ligne de bypass 62. Ces tubes sont immergés dans une capacité d'eau froide, typiquement à 12°C. Des purgeurs permettent d'évacuer l'éventuelle eau condensée en cas de fonctionnement dégradé de l'empilement 20.

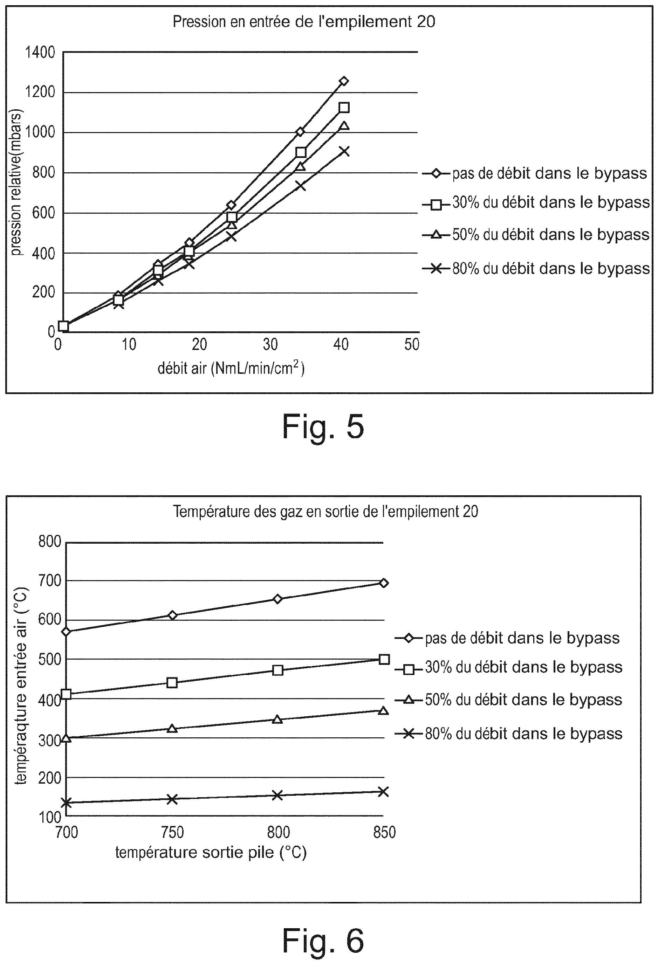

La figure 5 montre les résultats expérimentaux obtenus sur la mesure de la pression relative entre les chambres de circulation à hydrogène 21 et celles à oxygène 23, respectivement sans la ligne de bypass 62 (courbe du dessus), correspondant à une configuration selon l'état de l'art, avec la ligne de bypass 62 ouverte à 50% (courbe centrale) et avec la ligne de bypass 62 ouverte à 100%.

Il ressort donc de ces courbes comparatives que la ligne de bypass 62 selon l'invention permet de réduire la pression relative entre les chambres à hydrogène 21 et celles à oxygène 23 de façon importante dans la gamme des débits représentatifs du fonctionnement d'un électrolyseur SOEC et d'une pile SOFC.

La figure 6 montre les résultats expérimentaux obtenus sur la mesure de température de l'air en entrée d'empilement 20 fonctionnant en mode pile SOFC, respectivement avec la ligne de bypass 62 ouverte à 50% (courbe du dessous) et avec la ligne de bypass 62 fermée (courbe du dessous), ce dernier cas correspondant à une configuration selon l'état de l'art.

Il ressort donc de ces courbes comparatives confirme qu'ouvrir la vanne 63 sur la ligne de bypass 62 permet de réduire la température de l'air en entrée de pile SOFC et donc de réduire la température interne de l'empilement 20. Plus l'ouverture de la vanne 63 est importante plus la baisse de température interne de l'empilement est importante.

D'autres variantes et avantages de l'invention peuvent être réalisés sans pour autant sortir du cadre de l'invention.

L'invention n'est pas limitée aux exemples qui viennent d'être décrits ; on peut notamment combiner entre elles des caractéristiques des exemples illustrés au sein de variantes non illustrés.

## Revendications

1. Système comprenant:

   - un réacteur d'électrolyse ou de co-électrolyse à haute température (EHT) comprenant un empilement (20) de cellules d'(de co-)électrolyse élémentaires à oxydes solides comprenant chacune une cathode (12), une anode (14), et un électrolyte (16) intercalé entre l'anode et la cathode, les cellules étant connectées électriquement en série, l'empilement comprenant deux bornes électriques (30, 32) pour l'alimentation en courant des cellules et définissant, sur les cathodes, des premières chambres de circulation (21) et, sur les anodes, des deuxièmes chambres de circulation (23);
   - au moins une première ligne d'alimentation (L1), apte à alimenter en un mélange de vapeur d'eau et d'hydrogène ou en un mélange de vapeur d'eau, d'hydrogène et dioxyde de carbone ($CO_2$), selon un débit $D_H$, l'entrée des premières chambres;
   - au moins une deuxième ligne d'alimentation (L2), apte à alimenter en air ou en oxygène ou en un mélange de gaz contenant de l'oxygène, selon un débit $Do$, l'entrée des deuxièmes chambres;
   - au moins une première ligne d'évacuation (L3), apte à évacuer l'hydrogène produit à la sortie des premières chambres;
   - au moins une deuxième ligne d'évacuation (L4), apte à évacuer l'oxygène produit à la sortie des deuxièmes chambres;
   - un premier échangeur thermique (60), agencé entre la deuxième ligne d'alimentation (L2) et la deuxième ligne d'évacuation (L4), de sorte à récupérer la chaleur des gaz de sortie des deuxièmes chambres et la transférer aux gaz en entrée de ces mêmes chambres afin de préchauffer lesdits gaz;
   - une ligne de bypass (62) de la deuxième ligne d'évacuation, agencée entre l'entrée et la sortie de l'échangeur (60), de sorte à dériver tout ou partie des gaz de la sortie des deuxièmes chambres (23), la partie ou la totalité des gaz dérivée ne circulant alors pas dans l'échangeur (60);
   - une vanne de réglage de débit (63), apte à laisser passer un débit de 0 à 100%, agencée sur la ligne de bypass (62).

2. Système comprenant:

   - une pile à combustible (SOFC) à haute température comprenant un empilement (20) de cellules électrochimiques élémentaires à oxydes solides comprenant chacune une anode, une cathode, et un électrolyte intercalé entre l'anode et la cathode, les cellules étant connectées électriquement en série, l'empilement comprenant deux bornes électriques pour la récupération en courant des cellules et définissant, sur les anodes, des premières chambres de circulation et, sur les cathodes, des deuxièmes chambres de circulation;

- au moins une première ligne d'alimentation (L1), apte à alimenter en dihydrogène ou en un autre gaz combustible ou un mélange contenant un gaz combustible, selon un débit $D_H$, l'entrée des premières chambres;
- au moins une deuxième ligne d'alimentation (L2), apte à alimenter en air ou en oxygène ou en un mélange de gaz contenant de l'oxygène, selon un débit $Do$, l'entrée des deuxièmes chambres;
- au moins une première ligne d'évacuation (L3), apte à évacuer le surplus de dihydrogène ou autre combustible à la sortie des premières chambres;
- au moins une deuxième ligne d'évacuation (L4), apte à évacuer le surplus d'air ou d'oxygène ou du mélange de gaz contenant de l'oxygène à la sortie des deuxièmes chambres;
- un premier échangeur thermique (60), agencé entre la deuxième ligne d'alimentation (L2) et la deuxième ligne d'évacuation (L4), de sorte à récupérer la chaleur des gaz de sortie des deuxièmes chambres et la transférer aux gaz en entrée de ces mêmes chambres afin de préchauffer lesdits gaz;
- une ligne de bypass (62) de la deuxième ligne d'évacuation, agencée entre l'entrée et la sortie de l'échangeur (60), de sorte à dériver tout ou partie des gaz de la sortie des deuxièmes chambres (23), la partie ou la totalité des gaz dérivée ne circulant alors pas dans l'échangeur (60);
- une première vanne de réglage de débit (63), apte à régler un débit de 0 à 100%, agencée sur la ligne de bypass (62).

3. Système selon les revendications 1 et 2, constituant le même système destiné à fonctionner de manière réversible en mode électrolyse, et en mode pile à combustible, le cas échéant avec reformage interne de méthane.

4. Système selon l'une des revendications 1 à 3, comprenant en outre un deuxième échangeur thermique (50), agencé entre la première ligne d'alimentation (L1) et la troisième ligne d'évacuation (L3), de sorte à récupérer la chaleur des gaz de sortie des premières chambres et la transférer aux gaz en entrée de ces mêmes chambres afin de préchauffer lesdits gaz.

5. Système selon la revendication 4, comprenant en outre une deuxième vanne de débit réglable (51), apte à régler un débit de 0 à 100%, agencée sur la deuxième ligne d'évacuation (L3) en aval de la sortie du deuxième échangeur thermique (50).

6. Système selon la revendication 5, comprenant en outre un condenseur (70) agencé en amont de la deuxième vanne (51) et dimensionné pour éliminer la vapeur d'eau du mélange gazeux circulant dans la deuxième ligne d'évacuation (L3) des premières chambres, et pour permettre un fonctionnement de la deuxième vanne (51) à température refroidie, de préférence à température ambiante.

7. Système selon l'une quelconque des revendications précédentes, comprenant en outre une troisième vanne de débit (61) réglable apte à régler un débit de 0 à 100%, agencée sur la deuxième ligne d'évacuation (L4) en aval de la sortie du premier échangeur thermique (60).

8. Système selon la revendication 7, comprenant en outre un refroidisseur (80) agencé entre la ligne de bypass (62) et la deuxième ligne d'évacuation (L4) des deuxièmes chambres, et en amont de la première (63) et de la troisième (61) vanne, le refroidisseur (80) étant dimensionné de sorte à refroidir le mélange gazeux circulant à la fois dans la ligne de bypass (62) et dans la deuxième ligne d'évacuation (L4) et à permettre un fonctionnement desdites première (63) et troisième (61) vannes à température refroidie, de préférence à température ambiante.

9. Système selon la revendication 8, le refroidisseur (80) étant un condenseur comprenant un dispositif de purge de l'eau liquide condensée.

10. Système selon l'une quelconque des revendications précédentes, comprenant en outre une première source de chaleur externe (90) agencée sur la première ligne d'alimentation (L1) à l'entrée des premières chambres (21), le cas échéant en aval du deuxième échangeur thermique (50), pour apporter de la chaleur supplémentaire, afin de compléter le chauffage des gaz sur ladite première ligne (L1).

11. Système selon l'une quelconque des revendications précédentes, comprenant en outre une deuxième source de chaleur externe (91), agencée sur la deuxième ligne d'alimentation (L2) à l'entrée des deuxièmes chambres (23), et en aval du premier échangeur thermique (60), pour apporter de la chaleur supplémentaire, afin de compléter le chauffage des gaz sur ladite ligne (L2).

**Patentansprüche**

1. System, umfassend:

   - einen Hochtemperaturelektrolyse- oder - coelektrolyse(HTE)-Reaktor, umfassend einen Stapel (20) von Festoxid(co-)elektrolyse-Elementarzellen, die jeweils eine Kathode (12), eine Anode (14) und einen zwischen die Anode und die Kathode eingebrachten Elektrolyten (16) umfassen, wobei die Zellen elektrisch in Reihe geschaltet sind, wobei der Stapel zwei elektrische Anschlüsse (30, 32) für die Versorgung der Zellen mit Strom umfasst und an den Kathoden erste Zirkulationskammern (21) und an den Anoden zweite Zirkulationskammern (23) bildet;
   - mindestens eine erste Beschickungsleitung (L1), die dafür ausgelegt ist, den Einlass der ersten Kammern mit einem Gemisch von Wasserdampf und Wasserstoff oder einem Gemisch von Wasserdampf, Wasserstoff und Kohlendioxid ($CO_2$) in einem Durchsatz $D_H$ zu beschicken;
   - mindestens eine zweite Beschickungsleitung (L2), die dafür ausgelegt ist, den Einlass der zweiten Kammern mit Luft oder Sauerstoff oder einem sauerstoffhaltigen Gasgemisch in einen Durchsatz $Do$ zu beschicken;
   - mindestens eine erste Ausleitung (L3), die dafür ausgelegt ist, den produzierten Wasserstoff am Auslass der ersten Kammern auszuleiten;
   - mindestens eine zweite Ausleitung (L4), die dafür ausgelegt ist, den produzierten Sauerstoff am Auslass der zweiten Kammern auszuleiten;
   - einen zwischen der zweiten Beschickungsleitung (L2) und der zweiten Ausleitung (L4) angeordneten ersten Wärmetauscher (60), um die Wärme der aus den zweiten Kammern ausgeleiteten Gase zurückzugewinnen und sie auf die in dieselben Kammern eingeleiteten Gase zum Vorwärmen dieser Gase zu übertragen;
   - eine zwischen dem Einlass und dem Auslass des Wärmetauschers (60) angeordnete Bypassleitung (62) der zweiten Ausleitung, um die gesamten oder einen Teil der aus den zweiten Kammern (23) ausgeleiteten Gase abzuleiten, wobei der Teil der oder die gesamten abgeleiteten Gase dann nicht mehr im Tauscher (60) zirkulieren;
   - ein an der Bypassleitung (62) angeordnetes Durchsatzregelventil (63), das dafür ausgelegt ist, einen Durchsatz von 0 bis 100 % durchzulassen.

2. System, umfassend:

   - eine Hochtemperatur-Brennstoffzelle (SOFC), umfassend einen Stapel (20) von elektrochemischen Festoxid-Elementarzellen, die jeweils eine Anode, eine Kathode und einen zwischen die Anode und die Kathode eingebrachten Elektrolyten umfassen, wobei die Zellen elektrisch in Reihe geschaltet sind, wobei der Stapel zwei elektrische Anschlüsse für die Gewinnung von Strom aus den Zellen umfasst und an den Anoden erste Zirkulationskammern und an den Kathoden zweite Zirkulationskammern bildet;
   - mindestens eine erste Beschickungsleitung (L1), die dafür ausgelegt ist, den Einlass der ersten Kammern mit molekularem Wasserstoff oder einem anderen brennbaren Gas oder einem Gemisch, das ein brennbares Gas enthält, in einem Durchsatz $D_H$ zu beschicken;
   - mindestens eine zweite Beschickungsleitung (L2), die dafür ausgelegt ist, den Einlass der zweiten Kammern mit Luft oder Sauerstoff oder mit einem sauerstoffhaltigen Gasgemisch in einem Durchsatz $Do$ zu beschicken;
   - mindestens eine erste Ausleitung (L3), die dafür ausgelegt ist, den Überschuss von molekularem Wasserstoff oder einem anderen Brennstoff am Auslass der ersten Kammern auszuleiten;
   - mindestens eine zweite Ausleitung (L4), die dafür ausgelegt ist, den Überschuss von Luft oder Sauerstoff oder des sauerstoffhaltigen Gasgemischs am Auslass der zweiten Kammern auszuleiten;
   - einen zwischen der zweiten Beschickungsleitung (L2) und der zweiten Ausleitung (L4) angeordneten ersten Wärmetauscher (60), um die Wärme der aus den zweiten Kammern ausgeleiteten Gase zurückzugewinnen und sie auf die in dieselben Kammern eingeleiteten Gase zum Vorwärmen dieser Gase zu übertragen;
   - eine zwischen dem Einlass und dem Auslass des Wärmetauschers (60) angeordnete Bypassleitung (62) der zweiten Ausleitung, um die gesamten oder einen Teil der aus den zweiten Kammern (23) ausgeleiteten Gase abzuleiten, wobei der Teil der oder die gesamten abgeleiteten Gase dann nicht mehr im Tauscher (60) zirkulieren;
   - ein an der Bypassleitung (62) angeordnetes Durchsatzregelventil (63), das dafür ausgelegt ist, einen Durchfluss von 0 bis 100 % zu regeln.

3. System nach den Ansprüchen 1 und 2, die das gleiche System darstellen, das dafür ausgelegt ist, auf reversible Weise im Elektrolysemodus und im Brennstoffzellenmodus, gegebenenfalls mit interner Methanreformierung, zu arbeiten.

**4.** System nach einem der Ansprüche 1 bis 3, das ferner einen zwischen der ersten Beschickung (L1) und der dritten Ausleitung (L4) angeordneten zweiten Wärmetauscher (50) umfasst, um die Wärme aus den aus den ersten Kammern ausgeleiteten Gasen zurückzugewinnen und sie auf die in dieselben Kammern eingeleiteten Gase zum Vorwärmen dieser Gase zu übertragen.

**5.** System nach Anspruch 4, das ferner ein an der zweiten Ausleitung (L3) stromabwärts des Auslasses des zweiten Wärmetauschers (50) angeordnetes zweites regelbares Durchsatzventil (51) umfasst, das dafür ausgelegt ist, einen Durchsatz von 0 bis 100 % zu regeln.

**6.** System Anspruch 5, das ferner einen Kondensator (70) umfasst, der stromaufwärts des zweiten Ventils (51) angeordnet und dafür dimensioniert ist, den Wasserdampf aus dem in der zweiten Ausleitung (L3) der ersten Kammern zirkulierenden Gasgemisch zu beseitigen und das Arbeiten des zweiten Ventils (51) bei abgekühlter Temperatur, vorzugsweise bei Umgebungstemperatur, zu ermöglichen.

**7.** System nach einem der vorhergehenden Ansprüche, das ferner ein an der zweiten Ausleitung (L4) stromabwärts des Auslasses des ersten Wärmetauschers (60) angeordnetes drittes regelbares Durchsatzventil (61) umfasst, das dafür ausgelegt ist, einen Durchsatz von 0 bis 100 % zu regeln.

**8.** System nach Anspruch 7, das ferner einen Kühler (80) umfasst, der zwischen der Bypassleitung (62) und der zweiten Ausleitung (L4) der zweiten Kammern und stromaufwärts des ersten (63) und des (61) dritten Ventils angeordnet ist, wobei der Kühler (80) dafür dimensioniert ist, sowohl das in der Bypassleitung (62) als auch in der zweiten Auslassleitung (L4) zirkulierende Gasgemisch abzukühlen und das Arbeiten des ersten (63) und des dritten (61) Ventils bei abgekühlter Temperatur, vorzugsweise bei Umgebungstemperatur, zu ermöglichen.

**9.** System nach Anspruch 8, wobei der Kühler (80) ein Kondensator ist, der eine Vorrichtung zum Ausleiten von kondensiertem flüssigem Wasser umfasst.

**10.** System nach einem der vorhergehenden Ansprüche, das ferner eine an der ersten Beschickungsleitung (L1) am Einlass der ersten Kammern (21), gegebenenfalls stromabwärts des zweiten Wärmetauschers (50), angeordnete erste externe Wärmequelle (90) zum Einbringen zusätzlicher Wärme umfasst, um das Erwärmen der Gase in der ersten Leitung (L1) zu vervollständigen.

**11.** System nach einem der vorhergehenden Ansprüche, das ferner eine an der zweiten Beschickungsleitung (L2) am Einlass der zweiten Kammern (23) und stromabwärts des ersten Wärmetauschers (60) angeordnete zweite externe Wärmequelle (91) zum Einbringen von zusätzlicher Wärme umfasst, um das Erwärmen der Gase in der Leitung (L2) zu vervollständigen.

**Claims**

**1.** System comprising:

- a high-temperature electrolysis or co-electrolysis (HTE) reactor comprising a stack (20) of individual solid oxide (co-)electrolysis cells each comprising a cathode (12), an anode (14), and an electrolyte (16) inserted between the anode and the cathode, the cells being electrically connected in series, the stack comprising two electrical terminals (30, 32) for supplying current to the cells and defining, on the cathodes, first flow chambers (21) and, on the anodes, second flow chambers (23) ;
- at least one first supply line (L1), capable of supplying the inlet of the first chambers with a mixture of steam and hydrogen or with a mixture of steam, hydrogen and carbon dioxide ($CO_2$), at a flow rate $D_H$;
- at least one second supply line (L2), capable of supplying the inlet of the second chambers with air or with oxygen or with a mixture of oxygen-containing gases, at a flow rate $Do$;
- at least one first discharge line (L3), capable of discharging the hydrogen produced at the outlet of the first chambers;
- at least one second discharge line (L4), capable of discharging the oxygen produced at the outlet of the second chambers;
- a first heat exchanger (60), arranged between the second supply line (L2) and the second discharge line (L4), so as to recover the heat from the gases leaving the second chambers and transfer it to the gases entering these same chambers in order to preheat said gases;
- a bypass line (62) of the second discharge line, arranged between the inlet and the outlet of the exchanger (60), so as to divert all or some of the gases from the outlet of the second chambers (23), the portion or all of the gases diverted not then flowing through the exchanger (60);
- a flow control valve (63), capable of allowing through a flow rate of from 0 to 100%, arranged on the bypass line (62).

2. System comprising:

- a high-temperature fuel cell (SOFC) comprising a stack (20) of individual solid oxide electrochemical cells each comprising an anode, a cathode, and an electrolyte inserted between the anode and the cathode, the cells being electrically connected in series, the stack comprising two electrical terminals for recovering current from the cells and defining, on the anodes, first flow chambers and, on the cathodes, second flow chambers;
- at least one first supply line (L1), capable of supplying the inlet of the first chambers with dihydrogen or with another fuel gas or a mixture containing a fuel gas, at a flow rate $D_H$;
- at least one second supply line (L2), capable of supplying the inlet of the second chambers with air or with oxygen or with a mixture of oxygen-containing gases, at a flow rate $Do$;
- at least one first discharge line (L3), capable of discharging the excess dihydrogen or other fuel at the outlet of the first chambers;
- at least one second discharge line (L4), capable of discharging the excess air or oxygen or mixture of oxygen-containing gases at the outlet of the second chambers;
- a first heat exchanger (60), arranged between the second supply line (L2) and the second discharge line (L4), so as to recover the heat from the gases leaving the second chambers and transfer it to the gases entering these same chambers in order to preheat said gases;
- a bypass line (62) of the second discharge line, arranged between the inlet and the outlet of the exchanger (60), so as to divert all or some of the gases from the outlet of the second chambers (23), the portion or all of the gases diverted not then flowing through the exchanger (60);
- a first flow control valve (63), capable of controlling a flow rate of from 0 to 100%, arranged on the bypass line (62).

3. System according to Claims 1 and 2, constituting the same system intended to operate reversibly in electrolysis mode, and in fuel cell mode, if necessary with internal methane reforming.

4. System according to one of Claims 1 to 3, further comprising a second heat exchanger (50), arranged between the first supply (L1) and the third discharge line (L3), so as to recover the heat from the gases leaving the first chambers and transfer it to the gases entering these same chambers in order to preheat said gases.

5. System according to Claim 4, further comprising a second flow control valve (51), capable of controlling a flow rate of from 0 to 100%, arranged on the second discharge line (L3) downstream of the outlet of the second heat exchanger (50).

6. System Claim 5, further comprising a condenser (70) arranged upstream of the second valve (51) and sized in order to remove the steam from the gas mixture flowing in the second discharge line (L3) of the first chambers, and to enable operation of the second valve (51) at cooled temperature, preferably at ambient temperature.

7. System according to any one of the preceding claims, further comprising a third flow control valve (61), capable of controlling a flow rate of from 0 to 100%, arranged on the second discharge line (L4) downstream of the outlet of the first heat exchanger (60).

8. System according to Claim 7, further comprising a cooler (80) arranged between the bypass line (62) and the second discharge line (L4) of the second chambers, and upstream of the first (63) and third (61) valve, the cooler (80) being sized so as to cool the gas mixture flowing both in the bypass line (62) and in the second discharge line (L4) and to enable operation of said first (63) and third (61) valves at cooled temperature, preferably at ambient temperature.

9. System according to Claim 8, the cooler (80) being a condenser comprising a device for purging the condensed liquid water.

10. System according to any one of the preceding claims, further comprising a first external heat source (90) arranged on the first supply line (L1) at the inlet of the first chambers (21), if necessary downstream of the second heat exchanger (50), to provide additional heat, in order to supplement the heating of the gases on said first line (L1).

11. System according to any one of the preceding claims, further comprising a second external heat source (91) arranged on the second supply line (L2) at the inlet of the second chambers (23), and downstream of the first heat exchanger (60), to provide additional heat, in order to supplement the heating of the gases on said line (L2).

$$O^{2-} \rightarrow 1/2\,O_2 + 2e^-$$

$$H_2O + 2e^- \rightarrow H_2 + O^{2-}$$

Fig. 1

Fig. 2

$1/2O_2 + 2e^- \rightarrow O^{2-}$

$O_2$

$e^-$

10

30    C   I

14

16

12

$O^{2-}$

$e^-$

$H_2O$      $H_2$

$H_2 + O^{2-} \rightarrow H O + 2e^-$

## Fig. 3

90   Source chaude externe

50   Echangeur thermique

Chambre hydrogène   20

21

23

Chambre oxygène

Source chaude externe

52

Condenseur

70

91   60

Echangeur thermique

62

$D_H \rightarrow$

24

51

$D_O \rightarrow$

25

64

80

Refroidisseur

61    63

## Fig. 4

Fig. 5

Fig. 6

**EP 3 494 608 B1**

## RÉFÉRENCES CITÉES DANS LA DESCRIPTION

**Documents brevets cités dans la description**

- WO 2011110676 A
- US 20070231650 A
- US 20030207164 A
- WO 2010004093 A1
- CA 2446360
- EP 1202366 A
- JP 2002252003 A
- JP 2002225003 A
- US 20020081471 A